# EUROPÄISCHE PATENTANMELDUNG

(11) **EP 3 834 963 A1**
(43) Veröffentlichungstag der Anmeldung: **16.06.2021**
(21) Anmeldenummer: 19214430.1
(22) Anmeldetag: 09.12.2019
(51) Int. Cl.: B22F 3/105, B33Y 10/00, B33Y 30/00

(54) **ADDITIVE FERTIGUNGSANLAGE, ADDITIVES FERTIGUNGSVERFAHREN UND COMPUTERLESBARES-SPEICHERMEDIUM**

(71) Anmelder: Heraeus Additive Manufacturing GmbH, 63450 Hanau (DE)
(72) Erfinder: Bauereiß, Andreas, 63450 Hanau (DE); Klosch-Trageser, Michael, 63450 Hanau (DE)
(74) Vertreter: Kilchert, Jochen

(57) **Zusammenfassung**

Das selektive Laserschmelzen ist wegen der Reflektivität der eingesetzten Materialien nicht effizient.

Das Problem wird gelöst durch eine Additive Fertigungsanlage (1), insbesondere für selektives Laserschmelzen, umfassend:
- eine Bauplatte (11), die zur Aufnahme mindestens einer aus einem aufschmelzbaren Material gebildeten Pulverschicht (13) ausgebildet ist;
- eine Bestrahlungseinrichtung (6, 8, 18, 19), die dazu ausgebildet ist, einen Schmelzbereich (17) der Pulverschicht (13) zur Erzeugung einer Vertiefung (16) zu bestrahlen, wobei die Bestrahlungseinrichtung (6, 8, 18, 19) ferner dazu ausgebildet ist, die Pulverschicht (13) im Bereich der Vertiefung (16) durch Bestrahlung aufzuschmelzen.

## Beschreibung

Die Erfindung betrifft eine additive Fertigungsanlage, ein additives Fertigungsverfahren und ein entsprechendes computerlesbares-Speichermedium.

Es ist eine Vielzahl von Verfahren bekannt, um dreidimensionale Werkstücke aus einem oder mehreren flüssigen oder festen Werkstoffen herzustellen.

Beim selektiven Lasersintern (SLS) oder selektiven Laserschmelzen (SLM) sowie Elektronenstrahlschmelzen (SEBM) wird in einer Kammer zunächst ein Pulverbett bzw. eine Pulverschicht eines pulverförmigen Kunststoffs, eines Metalls oder einer Keramik auf eine Bauplatte aufgetragen. Das Pulverbett bzw. die Pulverschicht stellt eine dünne Schicht des verwendeten Pulvers dar, die z.B. durch Rakeln aufgetragen wird. Das Pulverbett besteht somit aus losen, unverschmolzenen Partikeln. Nach dem Auftragen des Pulverbetts entsteht eine Druckschicht durch selektives Verschmelzen/Versintern der Partikel des Pulverbetts durch einen Laserstrahl bzw. einen Elektronenstrahl. Im nächsten Schritt wird eine weitere Pulverschicht auf die vorherige Druckschicht aufgetragen und in ausgewählten Bereichen selektiv verschmolzen bzw. versintert. Die dadurch erzeugte weitere Druckschicht kann mit einer darunterliegenden Schicht verbunden bzw. verschmolzen sein. Aus der Summe der sequentiell aufgetragenen Druckschichten ergibt sich das fertige Druckerzeugnis. Dabei bilden die Kanten sämtlicher Druckschichten gemeinsam die Kontur des Druckerzeugnisses.

Das selektive Verschmelzen bzw. Versintern erfolgt bevorzugt durch Abrastern des Pulverbetts mittels energiereicher Strahlung. Das Abrastern erfolgt dabei üblicherweise linienförmig innerhalb einer Schicht, sodass einzelne Spuren entstehen, d.h. Schmelzspuren oder Sinterspuren. Diese Spuren verlaufen zumindest im Wesentlichen parallel zueinander, wobei die Spuren an alternierenden Enden miteinander verbunden sei können.

Eine weitere Methode zum Verschmelzen bzw. Versintern des Pulverbetts ist das vielfache, punktuelle Belichten. Dabei können aufeinanderfolgende Schmelzpunkte bzw. Sinterpunkte auch nicht auf einer Linie liegen, sondern quasi willkürlich über das Pulverbett verteilt sein. Optional erfolgt die Verteilung der Schmelzpunkte bzw. Sinterpunkte nach einem festen Muster, z.B. einem Schachbrettmuster.

Nach Abschluss einer Schicht, wird die Bauplatte geringfügig abgesenkt und eine neue Pulverschicht aufgezogen. Ein Druckerzeugnis entsteht daher aus der Summe der sequentiell aufgetragenen Druckschichten.

In üblichen SLM-Maschinen wird ein Dauerstrichlaser, z.B. ein Faserlaser, mit einer Wellenlänge von 1000-1100µm eingesetzt. Für die meisten Materialien ist eine solche Laserwellenlänge und die damit verbundene Leistungseinkopplung ausreichend, um den Werkstoff, also das Pulvermaterial, in einer gewünschten Qualität zu verarbeiten. Bei üblichen SLM-Anlagen wird die Pulverschicht von oben mit dem Laser aufgeschmolzen. Der Laser ist also oberhalb der Bauplatte angeordnet und bestrahlt das Pulverbett von oben. Der Strahl trifft dabei von oben auf das Material und schmilzt Pulverpartikel und darunterliegendes Material zu einer homogenen Masse auf. Für ein ausreichendes Produktionsergebnis ist es wichtig, dass die Absorption der Laserstrahlung groß genug ist, um ein stabiles Schmelzbad zu erzeugen, sodass das Material homogen und ohne Poreneinschlüsse aufschmelzen und erstarren kann. Ist dies nicht der Fall (bspw. bei zu geringer Laserleistung) findet kein oder nur ein teilweises Aufschmelzen statt. Dadurch kommt es lediglich zu einem "Versintern" des Pulverbettes (d.h. die Pulverpartikel haften lediglich aneinander) oder zu einem stark inhomogenen Aufschmelzen.

Die verwendeten Werkstoffe absorbieren meist nur einen Bruchteil der eintreffenden Laserstrahlung. Das bedeutet, dass ein Großteil der Laserenergie reflektiert und evtl. transmittiert wird und somit zur Erhitzung des Materials nichts beiträgt. Ein Aufschmelzen findet somit nicht hinreichend statt. Die Effizienz der SLM-Maschinen bzw. des SLM-Verfahrens ist daher unzureichend.

Darüber hinaus weisen Materialien wie bspw. reines Kupfer, Gold, Silber u.a. im Wellenlängenbereich des Lasers eine Reflektivität von über 90% auf. Solche Materialien lassen sich kaum mit zufriedenstellender Qualität in SLM-Maschinen verarbeiten. Aufgrund der Reflektion und der damit einhergehenden geringen Energieeinkopplung kommt es bei diesen Materialien zu unzureichendem Schmelzen.

Auch bei der Verarbeitung von nicht-hochreflektierenden Materialien ist eine zufriedenstellende Verarbeitung der verwendeten Materialien nicht immer gewährleistet. Beim Erhitzen von Legierungen mit Komponenten, deren Siedepunkte sich stark (um bspw. min. 300°C unterscheiden) kann es dazu kommen, dass sich einzelne Legierungselemente verflüchtigen und sich die Spezifikation des Materials verändert. Dadurch kommt es auch bei der Verarbeitung von nicht-hochreflektierende Materialien oftmals zu ungenügenden Ergebnissen. Beispiele für solche Legierungssysteme sind Titanaluminide.
Aus dem Stand der Technik ist es bekannt, die Oberfläche einer Pulverschicht mit unterschiedlichen Lasern zu behandeln. So ist aus der WO 2014071135 A1 bekannt, eine Pulverschicht zunächst mit einem gepulsten Laserstrahl zu bearbeiten und anschließend mit einem Dauerstrichlaser zu verschmelzen. Dies führt zu verbesserten Materialeigenschaften.

Aus der EP 2 361 751 B1 ist ein Verfahren zum Erhöhen der Dichte von Druckerzeugnissen eines Mikro-Lasersinter-Prozesses bekannt. Dabei werden zunächst Laserpulse auf einen zu verschmelzenden Bereich emittiert, um die Oberflächenspannung zu lösen und eine Verbindung der Pulverpartikel zu ermöglichen. Anschließend wird mit einem Dauerstrichlaser eine weitere Verdichtung des Materials bewirkt und Schmelzperlen vorgebeugt.

Die aus dem Stand der Technik bekannten Verfahren adressieren die Qualität des Druckerzeugnisses und nicht die Effizienz des Verfahrens aufgrund mangelnder Energieeinkopplung. Auch wird im Stand der Technik das Problem hochreflektierender Materialien nicht adäquat gelöst.

Es ist daher Aufgabe der Erfindung, die Effizienz eines additiven Herstellungsverfahrens bzw. einer additiven Fertigungsanlage zu verbessern. Es ist insbesondere Aufgabe der Erfindung, eine Verarbeitung von Materialien zu ermöglichen, die eine hohe Reflektivität im Wellenlängenbereich von Lasern des selektiven Laserschmelzens aufweisen. Es ist ferner insbesondere Aufgabe der Erfindung, die Qualität des Druckerzeugnisses eines selektiven Laserschmelzprozesses zu verbessern.

Die Aufgabe wird gelöst durch eine additive Fertigungsanlage nach Anspruch 1, ein additives Herstellungsverfahren nach Anspruch 15 und durch ein computerlesbares-Speichermedium nach Anspruch 18.

Mögliche Ausführungsformen der Erfindung ergeben sich aus den Unteransprüchen.

Die Aufgabe wird insbesondere gelöst durch eine additive Fertigungsanlage, insbesondere für selektives Laserschmelzen, umfassend:
- eine Bauplatte, die zur Aufnahme mindestens einer aus einem aufschmelzbaren Material gebildeten Pulverschicht ausgebildet ist;
- eine Bestrahlungseinrichtung, die dazu ausgebildet ist, einen Schmelzbereich der Pulverschicht zur Erzeugung einer Vertiefung zu bestrahlen, wobei die Bestrahlungseinrichtung ferner dazu ausgebildet ist, die Pulverschicht im Bereich der Vertiefung durch Bestrahlung aufzuschmelzen.

Ein Kerngedanke der Erfindung liegt darin, vor und/oder während dem Verschmelzen der Pulverpartikel, gezielt eine Vertiefung zu erzeugen bzw. aufrechtzuerhalten. Wird nach dem Erzeugen der Vertiefung dieser Bereich für den weiteren Aufschmelzvorgang bestrahlt, so kommt es innerhalb der Vertiefung zu Multireflektion, d.h. der Strahl der Bestrahlungseinrichtung wird von den Wänden der Vertiefung innerhalb der Vertiefung vielfach reflektiert. Somit kann eine verbesserte Absorption bzw. Energieeinkopplung der Strahlung erreicht werden. In Versuchen hat sich gezeigt, dass mit der beschriebenen Fertigungsanlage materialunabhängig eine Absorptionsrate von ca. 80% möglich ist.

Es ist möglich, die Vertiefung zu unterschiedlichen Zeitpunkten des Aufschmelzvorgangs zu erzeugen. So ist es in einer Ausführungsform möglich, vor dem eigentlichen Aufschmelzen die Vertiefung zum Beispiel durch eine Ablation mittels der Bestrahlungseinrichtung zu erzeugen.

In einer Ausführungsform ist es möglich, dass die Vertiefung als Dampfkapillare ausgebildet ist. In dieser Ausführungsform kann die Bestrahlungseinrichtung dazu ausgebildet sein, während dem Aufschmelzen eine Dampfkapillare zu erzeugen. Eine Dampfkapillare kann als eine Depression bzw. Vertiefung in einem Schmelzbad ausgebildet sein, die sich aufgrund eines hohen Verdampfungsdrucks lokal auf an der Oberfläche der Pulverschicht in der Umgebung des und/oder am heißesten Punkt bilden kann. Nachdem die Dampfkapillare gebildet ist, kann die Bestrahlungseinrichtung dazu ausgebildet sein, die Dampfkapillare durch Bestrahlung zu erhalten. Zum Erhalten der Dampfkapillare kann eine Laserintensität verwendet werden, die geringer ist, als die Laserintensität, die zum Bilden der Dampfkapillare verwendet wird.

Eine Vertiefung kann als ein langgestreckter Hohlraum ausgebildet sein. Insbesondere kann eine Vertiefung als eine langgestreckte, zumindest im Wesentlichen quer zur Oberfläche der Pulverschicht längs verlaufende, Ausnehmung in der Pulverschicht ausgebildet sein. Vorzugsweise weist eine Vertiefung einen kleinen Innendurchmesser auf.

Der Schmelzbereich kann einen Bereich an der Oberfläche der Pulverschicht angeben. Insbesondere kann der Schmelzbereich eine kreisförmig ausgebildete Teilfläche der Oberfläche der Pulverschicht angeben.

Die Bestrahlungseinrichtung kann dazu ausgebildet sein, die Vertiefung durch Ablation zu erzeugen. Bei einer Ablation kann die Vertiefung durch ein Verdampfen der Pulverschicht im Bereich des Schmelzbereichs gebildet werden. Die Ausführungsform bietet eine einfach und effiziente Variante, eine Vertiefung zu erzeugen.

In einer Ausführungsform kann bei der additiven Fertigungsanlage die Bestrahlungseinrichtung zur Abgabe eines Dauerstrichlaserstrahls und zum Bestrahlen des Schmelzbereichs für das Aufschmelzen mit dem Dauerstrichlaserstrahl ausgebildet sein.

Es ist demnach möglich, dass das Aufschmelzen mit einem Dauerstrichlaserstrahl ausgeführt wird. Es ist jedoch insbesondere denkbar, dass das Aufschmelzen mit einem kurzgepulsten Laserstrahl, z.B. einem Femtosekundenlaser, ausgeführt wird. Im Folgenden ist es explizit vorgesehen, dass ein Dauerstrichlaser durch einen Femtosekundenlaser austauschbar ist.

In einer Ausführungsform kann die Bestrahlungseinrichtung dazu ausgebildet sein, zumindest einen Teil der Energie des Dauerstrichlaserstrahls in die Vertiefung einzubringen.

Durch das Einbringen der Energie des Dauerstrichlaserstrahls kommt es verstärkt zu Multireflektion des Dauerstrichlaserstrahls innerhalb der Vertiefung. Besonders vorteilhaft ist, wenn die additive Fertigungsanlage eine Optik aufweist, die derart angeordnet und parametriert ist, sodass der Dauerstrichlaserstrahl vollständig in die Vertiefung eindringt. Im letztgenannten Fall ist eine besonders hohe Effizienz des Verfahrens gewährleistet.

In einer Ausführungsform kann die Bestrahlungseinrichtung zur Abgabe eines gepulsten Laserstrahls und zur Bestrahlung der Pulverschicht mit dem gepulsten Laserstrahl zur Bildung der Vertiefung ausgebildet sein.

Die Bestrahlungseinrichtung kann mittels eines gepulsten Laserstrahls eine Ablation der Pulverschicht im Schmelzbereich bewirken. Insbesondere kann die Bestrahlungseinrichtung dazu ausgebildet sein, mit einer Leistung und einer Laserintensität betrieben zu werden, die eine Ablation im Bereich des Schmelzbereichs bewirkt. Die Laserintensität kann die Leistung bezogen auf eine Fläche angeben, z.B. Watt/cm oder Watt/m.

In einer Ausführungsform kann die Bestrahlungseinrichtung dazu ausgebildet sein, einen/den gepulsten Laserstrahl mit einem Dauerstrichlaser, insbesondere unter Verwendung einer Modulationseinrichtung, zu erzeugen.

Eine besonders kompakte Ausführungsform der additiven Fertigungsanlage ergibt sich, wenn ein einzelner Laser vorgesehen ist, mit dem ein gepulster Laserstrahl und ein Dauerstrichlaserstrahl erzeugt werden kann. Dabei ist es nicht notwendig, eine Modulationseinrichtung zu verwenden. Es ist vielmehr auch möglich einen Dauerstrichlaser gepulst zu betreiben. Zum Beispiel kann die Pumpleistung eines Dauerstrichlasers in kurzen Zyklen ein- und ausgeschaltet werden.

Wenn eine Modulationseinrichtung verwendet wird, kann diese z.B. als ein Chopper ausgebildet sein.

In einer Ausführungsform kann die additive Fertigungsanlage eine Steuereinrichtung aufweisen, die dazu ausgebildet sein kann, zum Erzeugen der Vertiefung die Bestrahlungseinrichtung lotrecht über der dem Schmelzbereich, insbesondere über der zu erzeugenden Vertiefung, vorzugsweise lotrecht, anzuordnen. Vorzugsweise kann die Steuereinrichtung dazu ausgebildet sein, die Bestrahlungseinrichtung gegenüber einer horizontal verlaufenden und von der Oberfläche der Bauplatte definierten Ebene anzuordnen.

Durch eine lotrechte Bestrahlung kann die Vertiefung besonders tief in die Pulverschicht eingebracht werden. Somit wird auch im anschließenden Schmelzschritt eine sehr hohe Multireflektion erreicht, wodurch eine höhere Effizienz des Verfahrens erreicht wird.

In einer Ausführungsform kann die Steuereinrichtung dazu ausgebildet sein, zum Aufschmelzen der Pulverschicht im Bereich der Vertiefung die Bestrahlungseinrichtung derart anzuordnen, dass ein von der Bestrahlungseinrichtung ausgehender Strahl in einem Winkel kleiner 90° gegenüber einer durch die Oberfläche der Bauplatte bzw. der Pulverschicht definierten Ebene auf die Pulverschicht auftrifft.

Es ist besonders vorteilhaft, wenn die Bestrahlung der Vertiefung zum Aufschmelzen geneigt erfolgt, sodass eine Multireflexion innerhalb der Vertiefung entstehen kann. Zwar tritt wegen Materialunebenheiten auch bei einem direkten Einstrahlen in die Vertiefung eine Multireflexion auf, dieser Effekt kann jedoch durch ein geneigtes Einstrahlen verstärkt werden. Insgesamt wird somit mit der beschrieben Ausführungsform die Effizienz der Anlage nochmals erhöht.

In einer Ausführungsform kann die Pulverschicht, zumindest teilweise, aus einem Material gebildet sein, das bei einfallendem Licht mit einer Wellenlänge zwischen 250nm und 1250nm eine Reflektivität größer 70%, bevorzugt größer 80%, aufweist.

Die im selektiven Schmelzverfahren verwendeten Laser bzw. die Bestrahlungseinrichtung, z.B. der oben genannte Pulslaser oder der oben genannte Dauerstrichlaser, können dazu ausgebildet sein, Laserstrahlen mit einer Wellenlänge im Bereich von 250nm bis 1250nm auszusenden. Die Bestrahlungseinrichtung kann somit als ein Excimerlaser, als ein Festkörperlaser, als ein Halbleiterlaser oder als Farbstofflaser ausgebildet sein, die jeweils dazu konfiguriert sein können, auf einer Wellenlänge in dem vorgenannten Bereich zu emittieren. In diesen Wellenlängen weisen eine Reihe von Materialien eine große Reflektivität auf. Durch das Erzeugen einer Vertiefung kann trotz der hohen Reflektivität eine Absorption bzw. Energieeinkopplung der Laserenergie von bis zu 80% erreicht werden, sodass auch bei solchen Materialien ein sicheres Verschmelzen erreicht wird. Die genannten Materialien können Edelmetalle, u.a. Kupfer, Gold, Silber, Iridium, Platin und/oder diverse Nicht-Edelmetall-Legierungen oder eine Mischung verschiedener der genannten Materialien umfassen.

In einer Ausführungsform kann das aufschmelzbare Material als eine Legierung mit mindestens zwei Elementen ausgebildet sein, wobei die mindestens zwei Elemente unterschiedliche Siedepunkte aufweisen, insbesondere signifikant unterschiedliche Siedepunkte, wobei sich die Siedepunkte bevorzugt mindestens um 300 °C, 500°C, 600°C oder 800°C unterscheiden.

Wie oben ausgeführt, kann bei Erhitzen von Legierungen mit Komponenten, deren Siedepunkte sich unterscheiden, z.B. mindestens 300°C, dazu kommen, dass sich einzelne Legierungselemente verflüchtigen und sich die Spezifikation des Materials verändert. Dadurch kommt es auch bei der Verarbeitung von nicht-hochreflektierende Materialien oftmals zu ungenügenden Ergebnissen. Beispiele für solche Legierungssysteme sind Titanaluminide. Beim der vorstehenden beschrieben Ausführungsform wird dieser Effekt verhindert, da es durch das schnelle gleichmäßige Erhitzen des Materials zu einem gleichmäßigen Abdampfen aller Legierungselemente kommt

In einer Ausführungsform kann die Bestrahlungseinrichtung eine erste Strahlenquelle, insbesondere einen Pulslaser, zur Abgabe eines gepulsten Laserstrahls und eine zweite Strahlenquelle, insbesondere einen Dauerstrichlaser, zur Abgabe eines Dauerstrichlaserstrahls umfassen.

Neben einem einzelnen Laser kann es ebenso vorgesehen sein, mehrere Laser vorzusehen, die entsprechend in einem gepulsten Betrieb und als Dauerstrichlaser betrieben werde können. Somit ist es z.B. möglich, mit einem Dauerstrichlaser und mit einem gepulsten Laser gleichzeitig den Schmelzbereich zu bestrahlen. Mit der Ausführungsform kann die Effizienz daher weiter gesteigert werden.

In einer Ausführungsform kann die Bestrahlungseinrichtung dazu ausgebildet sein, in einer Pulsphase eine Vielzahl von gepulsten Laserstrahlen zum Bilden der Vertiefung abzugeben und in einer Schmelzphase den Dauerstrichlaserstrahl zum Aufschmelzen abzugeben, wobei die Schmelzphase der Pulsphase zeitlich nachgelagert sein kann.

In einer Ausführungsform kann die Bestrahlungseinrichtung dazu ausgebildet sein, die Vertiefung mit einer Tiefe von 10% bis 200% der nominellen Pulverschichtdicke, bevorzugt 50% bis 100% der nominellen Pulverschichtdicke, zu erzeugen.

In einer Ausführungsform ist demnach vorgesehen, dass zunächst die Vertiefung erzeugt wird und anschließend das Aufschmelzen der Pulverschicht durchgeführt wird. Mit dieser Ausführungsform kann die Vertiefung besonders genau erzeugt werden.

In einer Ausführungsform kann die Bestrahlungseinrichtung dazu ausgebildet sein, mindestens einen Laserimpuls zum Erzeugen der Vertiefung zumindest teilweise zeitgleich mit dem Dauerstrichlaserstrahl abzugeben.

Es ist also denkbar, dass der Dauerstrichlaser kontinuierlich die Pulverschicht bearbeitet. Überlagernd kann die Vertiefung erzeugt oder eine bestehende Vertiefung bzw. Dampfkapillare erhalten werden. Somit wird die Leistung des Dauerstrichlasers und des gepulsten Lasers genutzt, um die Vertiefung zu erzeugen bzw. zu erhalten. Durch die Vertiefung wird die Energie des Dauerstrichlasers besser absorbiert und somit kann der Dauerstrichlaser mit einer geringeren Leistung betrieben werden.

In einer Ausführungsform kann die Bestrahlungseinrichtung dazu ausgebildet sein, zum Erzeugen der Vertiefung die Pulverschicht mit einer ersten Laserintensität zu bearbeiten und dazu ausgebildet sein, zum Aufschmelzen der Pulverschicht die Pulverschicht mit einer zweiten Laserintensität zu bearbeiten. Die zweite Laserintensität kann kleiner als die erste Laserintensität ausgebildet sein, insbesondere mindestens kleiner gleich 50%, bevorzugt kleiner 30% als die erste Laserintensität. Die erste Laserintensität kann unter Berücksichtigung des zu verarbeitenden Materials derart gewählt sein, dass die Bestrahlung zu einer Ablation des Materials bzw. des Pulvers der Pulverschicht im Schmelzbereich führt.

In einer Ausführungsform kann die additive Fertigungsanlage umfassen:
- eine Bilderfassungseinrichtung, die dazu ausgebildet sein kann, Schmelzbilder aufzunehmen;
- eine Recheneinrichtung, die dazu ausgebildet sein kann, die Schmelzbilder hinsichtlich mindestens eines Qualitätskriteriums zu analysieren.

Mit einer Bilderfassungseinrichtung, z.B. einer CCD-Kamera, kann der Schmelzbereich überwacht werden. Die Schmelzbilder können somit den Schmelzbereich angeben. Mit der beschriebenen Ausführungsform kann das Ergebnis des Aufschmelzens unmittelbar analysiert werden und somit kann frühzeitig festgestellt werden, ob das Druckerzeugnis entsprechenden Qualitätskriterien genügt.

In einer Ausführungsform kann die Recheneinrichtung dazu ausgebildet sein, mindestens einen Prozessparameter der additiven Fertigungsanlagen, insbesondere der Bestrahlungseinrichtung, unter Berücksichtigung der Analyse des Qualitätskriteriums, einzustellen.

Es ist ferner möglich, eine Rückkopplung, d.h. einen Regelkreis, vorzusehen. Somit können die Prozessparameter der Anlage unter Berücksichtigung der Analyse eingestellt werden. Z.B. kann die Leistung der Bestrahlungseinrichtung, die Anstellwinkel der Strahlen und/oder eine Laserintensität eingestellt werden. Zusätzlich oder alternativ kann der Laserdurchmesser eingestellt werden. Es ist jedoch auch möglich, die Tiefe der und/oder den Durchmesser der Vertiefung unter Berücksichtigung der Analyse zu parametrieren. Insgesamt kann mit der beschriebenen Ausführungsform eine deutlich bessere Qualität des Druckerzeugnisses erreicht werden.

Die Aufgabe wird ferner insbesondere gelöst durch ein additives Herstellungsverfahren, insbesondere zur Verwendung mit einer additiven Fertigungsanlage wie sie vorstehend beschrieben ist, umfassend die folgenden Schritte:
- Bereitstellen einer Pulverschicht aus einem aufschmelzbaren Werkstoff;
- Bestrahlen eines Schmelzbereichs der Pulverschicht zur Erzeugung einer Vertiefung;
- Bestrahlen der Pulverschicht im Bereich der Vertiefung zum Aufschmelzen der Pulverschicht.

In einer Ausführungsform kann das Bestrahlen der Pulverschicht zur Erzeugung der Vertiefung das Abgeben einer Vielzahl von Laserimpulsen umfassen.

In einer Ausführungsform kann das Bestrahlen der Pulverschicht zur Erzeugung der Vertiefung mit einem Laserimpuls und das Bestrahlen zum Aufschmelzen der Pulverschicht zumindest teilweise gleichzeitig ausgeführt werden.

Die Aufgabe wird ferner insbesondere gelöst durch ein computerlesbares-Speichermedium, welches Instruktionen enthält, die mindestens einen Prozessor dazu veranlassen, ein wie vorstehend beschriebenes Verfahren zu implementieren, wenn die Instruktionen durch den mindestens einen Prozessor ausgeführt werden.

Es ist vorgesehen, dass sämtliche Verfahrensschritte, die hinsichtlich der Vorrichtung beschrieben sind auch mit dem Herstellungsverfahren kombinierbar sind. Ebenfalls ist vorgesehen, dass die entsprechenden Vorrichtungsbestandteile in optionalen Ausführungsformen zur Durchführung der Verfahrensschritte ausgebildet sind.

Es ergeben sich ähnliche oder identische Vorteile, wie sie bereits in Zusammenhang mit der additiven Fertigungsanlage beschrieben worden sind.

Im Folgenden wird die Erfindung anhand von Ausführungsbeispielen näher erläutert. Dabei zeigen:
- Figur 1:: eine beispielhafte additive Fertigungsanlage;
- Figur 2:: eine Illustration von reflektierten Strahlen;
- Figur 3:: eine schematische Darstellung einer Vertiefung;
- Figur 4:: eine schematische Darstellung von Multireflexion in einer Vertiefung;
- Figur 5:: einen zeitlichen Verlauf eines Aufschmelzvorgangs in einem ersten Ausführungsbeispiel;
- Figur 6:: einen zeitlichen Verlauf eines Aufschmelzvorgangs in einem zweiten Ausführungsbeispiel;
- Figur 7:: einen zeitlichen Verlauf eines Aufschmelzvorgangs in einem dritten Ausführungsbeispiel; und
- Figur 8:: eine schematische Darstellung einer additiven Fertigungsanlage.

Im Folgenden werden für gleiche und/oder gleichwirkende Teile dieselben Bezugsziffern verwendet.

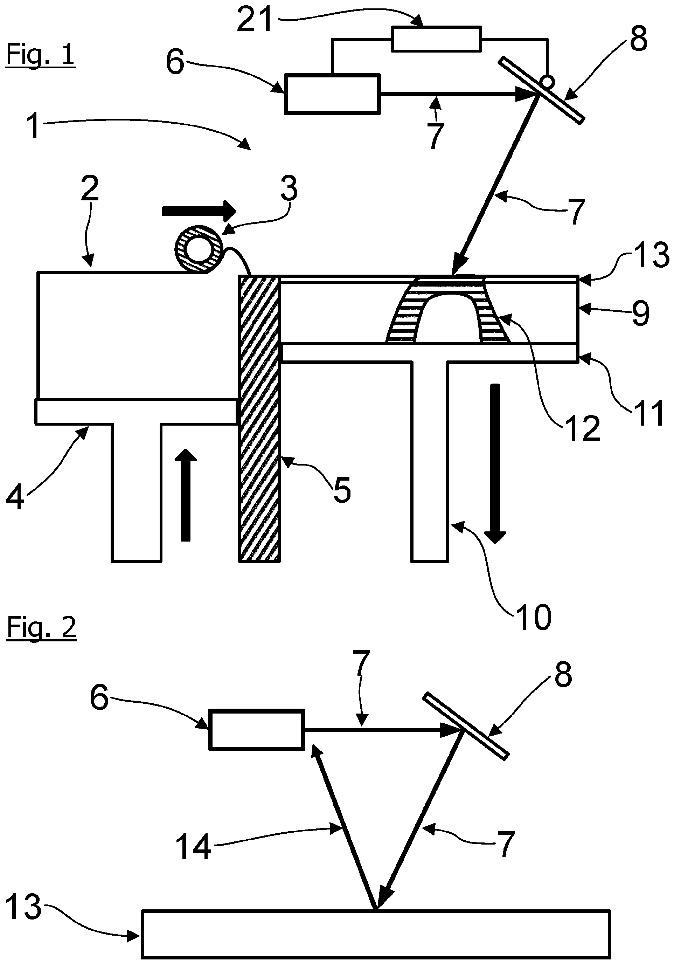

Figur 1 zeigt eine additive Fertigungsanlage 1 in einem ersten Ausführungsbeispiel. Die additive Fertigungsanlage 1 der Figur 1 umfasst ein Pulverreservoir 2, welches mit einem aufschmelzbaren Pulver gefüllt ist. Unterhalb des Pulverreservoir 2 ist ein Hebezylinder 4 vorgesehen, mit dem das Pulverreservoir 2 angehoben und abgesenkt werden kann.

Im rechten Teil der Figur 1 ist ein Pulverbett 9 dargestellt, welches auf einer Bauplatte 11 angeordnet ist, die Teil eines Senkzylinders 10 ist.

Oberhalb des Pulverbetts 9 ist eine Bestrahlungseinrichtung 6 vorgesehen, die über eine mit ihr kommunikativ verbundene Steuereinrichtung 21 gesteuert wird. Die Bestrahlungseinrichtung 6 ist dazu ausgebildet, einen Laserstrahl 7 in Richtung eines Reflektors 8, zum Beispiel einen Spiegel 8, abzugeben. Der Reflektor 8 ist derart angeordnet, sodass er den Laserstrahl 7 derart ablenkt, dass dieser auf das Pulverbett 9 in einem Schmelzbereich 17 trifft. Die Position an der der Laserstrahl 7 auf das Pulverbett 9 trifft, kann über die Stellung des Reflektors 8 eingestellt werden. Hierzu ist der Reflektor 8 kommunikativ mit der Steuereinrichtung 21 verbunden.

Zum Erzeugen eines Werkstückes 12 wird zunächst mit einer Rolle 3 eine Pulverschicht 13 auf die Bauplatte 11 aufgetragen. Das bedeutet, dass Pulver aus dem Pulverreservoir 2 unter Verwendung der Rolle 3 auf die Blauplatte 11 geschoben wird. Selbstverständlich kann anstelle einer Rolle 3 auch ein Schieber oder eine ähnliche Vorrichtung eingesetzt werden.

Die Pulverschicht 13 auf der Bauplatte 11 wird im Anschluss durch die Bestrahlungseinrichtung 6 vorzugsweise mit einem Laserstrahl 7 bestrahlt. Dabei kommt es an den bestrahlten Stellen zu einer Erhitzung der Pulverpartikel der Pulverschicht 13 und einem lokalen Aufschmelzen der Pulverschicht 13. Somit verbinden sich die nebeneinanderliegenden und aufgeschmolzenen Pulverpartikel dauerhaft. Nachdem eine Pulverschicht 13 bearbeitet worden ist, wird der Senkzylinder 10 um die Höhe einer Pulverschicht 13 abgesenkt und der Hebezylinder 4 um die Höhe einer Pulverschicht 13 angehoben. Somit kann unter Verwendung der Rolle 3 eine weitere Pulverschicht 13 auf der Bauplatte 11 platziert werden. Durch das Wiederholen des beschriebenen Verfahrens können somit aufwändige Werkstücke 12 additiv produziert werden.

Figur 2 zeigt eine schematische Darstellung einer Bestrahlungseinrichtung 6, die über einen Reflektor 8 einen Schmelzbereich einer Pulverschicht 13 mit einem Laserstrahl bearbeitet. In dem Beispiel der Figur 2 besteht die Pulverschicht 13 aus einem hochreflektierenden Material, wie zum Beispiel Gold. Beim Auftreffen des Laserstrahls 7 auf die Oberfläche der Pulverschicht 13 kommt es zu einer Reflexion 14, wobei ein Großteil der Strahlungsenergie reflektiert wird. Somit kommt es nicht zu einer starken lokalen Erhitzung und das Material schmilzt nicht oder nur unzureichend. Somit kann kein additives Fertigungsverfahren mit entsprechenden Qualitäten ausgeführt werden. Ein solches Verhalten tritt insbesondere bei hochreflektiven Materialien auf. Ein hochreflektives Material zeichnet sich dadurch aus, dass seine Reflektivität bei einfallendem Licht mit einer Wellenlänge im Bereich von 250 nm bis 1200 nm bereichsweise größer gleich 70 % ist.

Auch in den Fällen, in denen eine Reflexion nicht derart stark auftritt, dass kein Aufschmelzen des Pulvers auftritt, ist der Wirkungsgrad bzw. die Effizienz des additiven Fertigungsverfahrens nicht ausreichend.

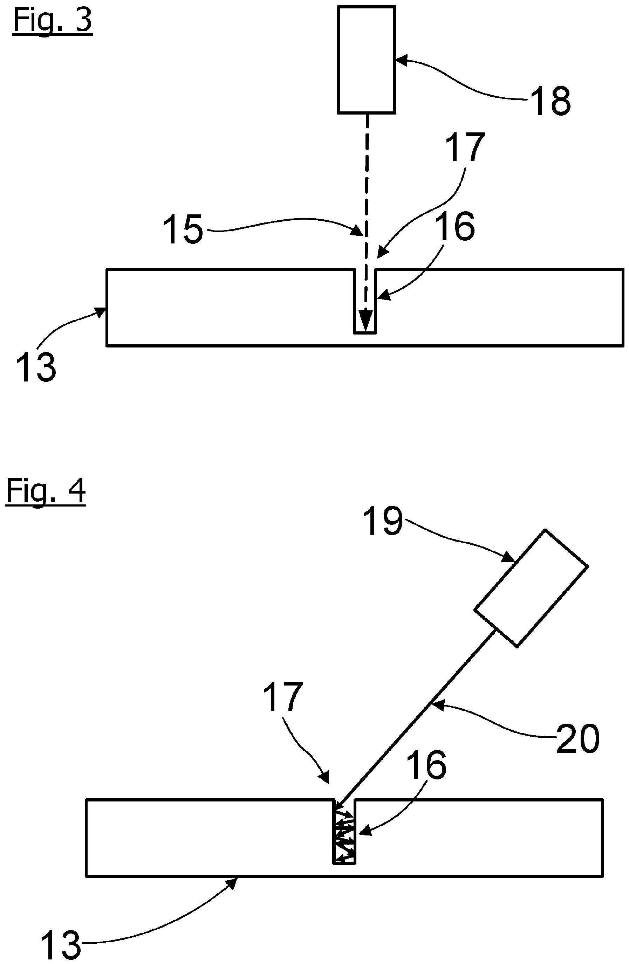

Die Figuren 3 und 4 zeigen schematisch, wie die Effizienz des Aufschmelzens erhöht werden kann. In der Figur 3 ist ein Pulslaser 18 oberhalb einer Pulverschicht 13 angeordnet. Der Pulslaser 18 bestrahlt die Pulverschicht 13 derart, dass ein einfallender gepulster Laserstrahl 15 z.B. lotrecht auf die Pulverschicht 13 in einem Schmelzbereich 17 auftritt. Der Pulslaser 18 wird in dem gezeigten Ausführungsbeispiel mit einer Leistung betrieben, die zu einer hohen Pulsenergie führt. Das bedeutet, dass die Leistung pro bestrahlter Fläche hoch ist, verglichen mit der Laserintensität die üblicherweise zu einem Aufschmelzen verwendet wird. Dadurch kommt es in dem gezeigten Ausführungsbeispiel in der Pulverschicht 13 lokal zu einer Ablation des Pulvermaterials. Das bedeutet, dass Material verdampft. Dadurch bildet sich in der Pulverschicht 13 eine Vertiefung 16.

Figur 4 zeigt einen Dauerstrichlaser 19, der oberhalb der Pulverschicht 13 angeordnet ist. Nachdem die Vertiefung 16 erzeugt worden ist, bestrahlt der Dauerstrichlaser 19 den Schmelzbereich 17 mit einem Dauerstrichlaserstrahl 20, sodass dieser seitlich in die Vertiefung 16 einfällt. Durch den seitlichen Einfall in die Vertiefung 16 kommt es innerhalb der Vertiefung 16 zu einer Multireflektion. Das bedeutet, dass der einfallende Dauerstrichlaserstrahl 20 von den seitlichen Wandlungen der Vertiefung 16 mehrfach reflektiert wird. Insgesamt entweicht nur wenig Energie aus der Vertiefung 16 und die von Laser eingebrachte Energie wird in dem Material der Pulverschicht 13 eingekoppelt. Durch die Energieeinkopplung kommt es zu einer starken Erhitzung der Pulverschicht 13 im Schmelzbereich 17, sodass die Pulverschicht 13 im Schmelzbereichs 17 aufgeschmolzen wird.

Durch das Bestrahlen der Pulverschicht 13 mit einem ersten Laserstrahl, der zu einer lokalen Ablation der Pulverschicht 13 führt, und somit eine Vertiefung 16 erzeugt und anschließender Behandlung desselben Bereichs mit einem Dauerstrichlaser 19, ist es möglich, auch sehr stark reflektierende Materialien in einem additiven Fertigungsverfahren zu verwenden. Auch bei nicht stark reflektierenden Materialien führt das in den Zusammenhang der Figuren 3 und 4 gezeigte Verfahren durch eine erhöhte Energieeinkopplung im aufzuschmelzenden Material zu einer Effizienzsteigerung.

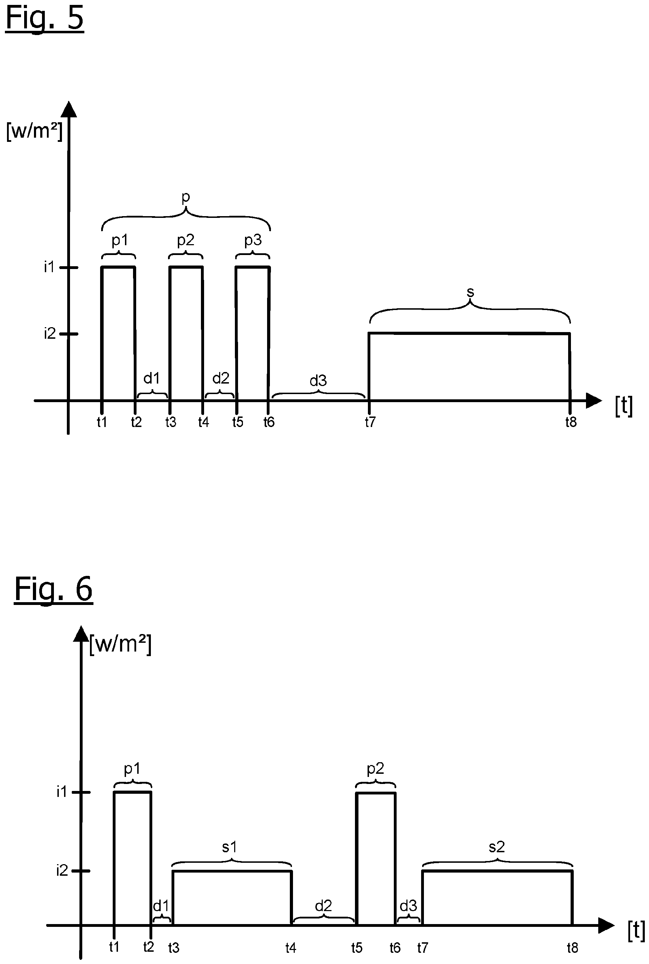

Im Zusammenhang mit der Figur 4 ist es ebenfalls möglich, dass durch ein Erhitzen des Schmelzbereichs 17 eine Dampfkapillare 16 erzeugt wird. Das bedeutet, dass sich durch die starke Erhitzung in dem Schmelzbad eine Dampfkapillare 16 ausbildet. Nachdem die Dampfkapillare 16 ausgebildet ist kann diese durch ein kontinuierliches Bestrahlen der Dampfkapillare 16 mit dem Laser 19 diese aufrechterhalten werden. Dabei kann der Laser 19 zum Aufrechterhalten der Dampfkapillare 16 mit einer geringeren Leistung betrieben werden als zum Erzeugen der Dampfkapillare 16. Es ist also nicht zwingend notwendig, zunächst eine Vertiefung 16 zu erzeugen, wie sie im Zusammenhang mit Figur 3 beschrieben worden ist. Figur 5 zeigt den zeitlichen Verlauf zum Erstellen der Vertiefung 16 und dem anschließenden Aufschmelzen des Pulvermaterials im Schmelzbereichs 17. Figur 5 zeigt auf der Y-Achse die Laserintensität, die in Watt pro Quadratmeter angegeben ist. Auf der X-Achse ist die Zeit angegeben. Wie zu erkennen ist, werden in einer Pulsphase p eine Vielzahl von hochenergetischen Laserimpulsen p1, p2, p3 abgegeben. Die Laserimpulse p1, p2, p3 erzeugen eine Vertiefung 16. Die Laserimpulse p1, p2, p3 werden mit einer Laserintensität i1 abgegeben. Laserimpuls p1 beginnt zu einem Zeitpunkt t1 und endet am Zeitpunkt t2. Während eines Zeitraums d1 nach dem Zeitpunkt t2 wird die Pulverschicht 13 mit keinem Laser bearbeitet. Am Ende des Zeitraums d1 beginnt der Laserimpuls p2 zum Zeitpunkt t3 und endet zum Zeitpunkt t4. Im Anschluss folgt die Totzeit d2, zu der keine Bestrahlung der Pulverschicht 13 vorgenommen wird. Ein dritter Laserimpuls p3 wird zum Zeitpunkt t5 gestartet, der zum Zeitpunkt t6 endet.

Die Pulszeit errechnet sich somit aus der Differenz aus den Zeitpunkten t2 und t1. Die Totzeit ist durch den Zeitraum d1 angegeben. In dem Ausführungsbeispiel der Figur 5 sind die Laserimpulse p1, p2, p3 jeweils gleich lang und zwischen den Laserimpulsen p1, p2, p3 liegen die Zeiträume d1 und d2, die ebenfalls als gleich lang angenommen werden. Selbstverständlich kann ebenfalls vorgesehen sein, dass die Laserimpulse p1, p2, p3 jeweils unterschiedlich lang sind und/oder das zwischen den Laserimpulsen unterschiedlich lange Totzeiten d1, d2 liegen. Es ist ferner denkbar, dass die Laserimpulse p1, p2, p3 unterschiedliche Laserintensitäten i1, i2 aufweisen.

Nach der Pulsphase p zum Erzeugen der Vertiefung 16 im Schmelzbereich 17, folgt eine Schmelzphase s. Die Schmelzphase s beginnt zum Zeitpunkt t7 und endet zum Zeitpunkt t8. In der Schmelzphase s wird der Schmelzbereich 17 mit einem Dauerstrichlaser 19 mit einer Laserintensität i2 bestrahlt. Die Laserintensität i2 ist kleiner als die Laserintensität i1. Durch das Bestrahlen des Schmelzbereichs 17 mit einem Dauerstrichlaser 19 kommt es in der erzeugten Vertiefung 16 zu Multireflektion und zu einer Energieeinkopplung in der Pulverschicht 13, sodass die Pulverpartikel verschmelzen.

Figur 6 zeigt ein zweites Ausführungsbeispiel zum Betreiben der additiven Fertigungsanlage 1. Im Gegensatz zu dem Ausführungsbeispiel der Figur 5 wird im Ausführungsbeispiel der Figur 6 nicht zwischen einer Pulsphase p und einer Schmelzphase s unterschieden. Vielmehr wechseln sich die Phasen p, s regelmäßig ab. Wie aus Figur 6 erkennbar, wird zunächst mit einem Laserimpuls p1 der Schmelzbereich 17 der Pulverschicht 13 bestrahlt. Dadurch kommt es zur Bildung einer Vertiefung 16, die jedoch kleiner ist, als die im Ausführungsbeispiel der Figur 5 erzeugte Vertiefung 16, die durch die drei Laserimpulse p1, p2, p3 erzeugt ist.

Im Anschluss an den Laserimpuls p1, wird nach einer Totzeit d1 der Schmelzbereich 17 mit einem Dauerstrichlaser s1 bestrahlt. Obwohl die Vertiefung 16, die durch den Pulslaser p1 erzeugt ist, nicht sehr groß ist, so kommt es dennoch bereits zu einer Multireflektion, sodass bereits für die Energieeinkopplung des Dauerstrichlasers s1 eine erhöhte Effizienz feststellbar ist.

Im Anschluss an die Bestrahlung mit dem Dauerstrichlaser s1 und einer weiteren Totzeit d2 wird der Schmelzbereich 17 zum Zeitpunkt t5 mit einem zweiten Laserimpuls p2 bestrahlt. Durch den zweiten Laserimpuls p2 wird die Vertiefung 16 weiterbearbeitet und vergrößert. Dadurch kann durch einen nachfolgend eingesetzten Dauerstrichlaser s2 das Material im Schmelzbereich 17 aufgeschmolzen werden.

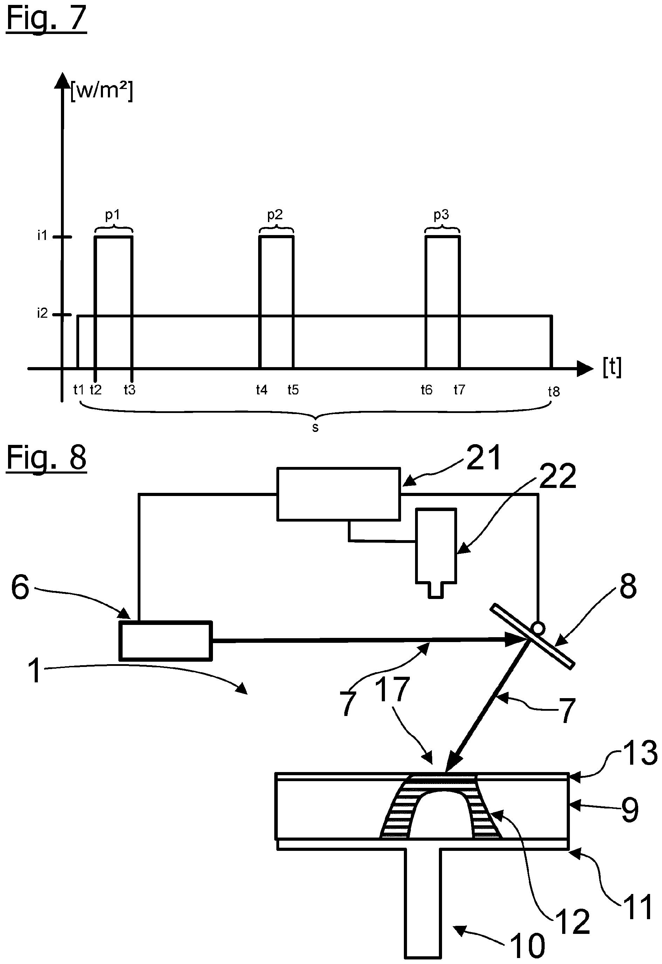

Figur 7 zeigt ein drittes Ausführungsbeispiel, bei dem eine Dauerstrichlaser 20 und ein Pulslaser 18 parallel, d. h. zeitgleich, eingesetzt werden. Wie zu erkennen ist, wird zum Zeitpunkt t1 die Schmelzphase s begonnen. Dabei wird der Schmelzbereich 17 der Pulverschicht 13 mit einem Dauerstrichlaser 20 mit der Intensität i2 bestrahlt. Kurz nachdem der Dauerstrichlaser 10 eingeschaltet worden ist, wird zum Zeitpunkt t2 ein Laserimpuls p1 mit einer Laserintensität i1 auf den Schmelzbereich 17 gerichtet, sodass eine Vertiefung 16 als Dampfkapillare 16 gebildet wird. Das bedeutet, dass es an der Pulverschicht 13 zu einer im Vergleich zur durch die Intensität i2 des Dauerstrichlasers 20 hervorgerufenen Verdampfung zu einer stark erhöhten Verdampfung, bis in den Ablationsbereich kommen kann. Diese, die Dampfkapillare 16 erzeugende, oder verstärkende Verdampfung ist durch die Pulsung stärker ausgeprägt, als es durch eine Erhöhung der Intensität i2 um den zeitlichen Mittelwert der gepulsten Intensität i1 möglich wäre. Durch die Pulsung wird somit die Energieeffizienz des Gesamtsystems erhöht. Zum Zeitpunkt t3 wird der Laserimpuls p1 ausgeschaltet und es wird ausschließlich mit dem Dauerstrichlaser 20 Laserenergie in das Material der Pulverschicht 13 eingekoppelt. Zum Zeitpunkt t4 wird ein zweiter Laserimpuls p2 bis zum Zeitpunkt t5 mit einer Laserintensität i1 auf den Schmelzbereich 17 gerichtet. Dadurch wird die Dampfkapillare 16 verfeinert. Dieses Verfahren kann beliebig oft wiederholt werden. Im Beispiel der Figur 7 ist exemplarisch ein dritter Laserimpuls p3 gezeigt. Zum Zeitpunkt t8 wird der Dauerstrichlaser 20 abgeschaltet und die Schmelzphase s ist beendet.

Die Ausführungsform der Figur 7 wird mit zwei Lasern 18, 20 ausgeführt. Die Ausführungsformen der Figuren 5 und 6 können auch mit einem einzelnen Laser ausgeführt werden, wobei zwei Laser ebenfalls denkbar sind.

Figur 8 zeigt eine additive Fertigungsanlage 1 mit einer visuellen Rückkopplung und Prozesssteuerung. Bei der additiven Fertigungsanlage 1 nach Figur 8 ist vereinfacht lediglich ein halbfertiges Werkstück in einem Pulverbett 9 auf einer Bauplatte 11 gezeigt. Die Bauplatte 11 ist Teil eines Absenkzylinders 10. Ferner ist in Figur 8 gezeigt, dass oberhalb des Pulverbetts 9 eine Bilderfassungseinrichtung 22 angeordnet ist, die einen von einem Laserstrahl 7 bearbeiteten Schmelzbereich 17 aufnimmt. Die Bilderfassungseinrichtung 22 kann beispielsweise als eine gewöhnliche RGB Kamera 22 ausgebildet sein. Es ist ferner denkbar, dass es sich bei der Bilderfassungseinrichtung 22 um eine Infrarotkamera handelt. Die Bilderfassungseinrichtung 22 ist kommunikativ mit der Steuereinrichtung 21 verbunden. Die Steuereinrichtung 21 ist dazu ausgebildet, die von der Bilderfassungseinrichtung 22 aufgenommenen Schmelzbilder zu analysieren. Beispielsweise kann die Steuereinrichtung 21 überprüfen, ob visuelle Merkmale in den Schmelzbildern vorhanden sind, insbesondere ob sich Schweißperlen gebildet haben. Dazu können visuelle Marker in den Schmelzbildern detektiert werden. Zum Beispiel kann ein Klassifikator eingesetzt werden, um eine Bilderkennung zur Erkennung der visuellen Marker auszuführen.

Unter Berücksichtigung der Analyse der Schmelzbilder kann die Steuereinrichtung 21 die Bestrahlungseinrichtung 6 steuern. Insbesondere kann die Steuereinrichtung 21 Prozessparameter der Bestrahlungseinrichtung 6 und des Reflektors 8 steuern bzw. einstellen. Beispielsweise ist die Steuereinrichtung 21 dazu ausgebildet, die Laserintensität und/oder die Leistung der Bestrahlungseinrichtung 6 einzustellen.

Es ist ebenso denkbar, dass die Steuereinrichtung 21 dazu ausgebildet ist, die Intensität, die Dauer eines Laserimpulses und/oder eines Bestrahlens mit einem Dauerstrichlaserstrahl als Prozessparameter der Bestrahlungseinrichtung 6 einzustellen. Auch kann durch die Steuereinrichtung 21 dazu ausgebildet sein, den Anstellwinkel des einfallenden Laserstrahls 7 durch eine Verschiebung entweder der Bauplatte 11 oder des Reflektors 8 zu verändern.

An dieser Stelle wird darauf hingewiesen, dass alle oben beschriebenen Teile für sich alleine gesehen und in jeder Kombination, insbesondere den in den Zeichnungen dargestellten Details, als erfindungswesentlich beanspruchte werden.

### Bezugszeichenliste:

- 1: Additive Fertigungsanlage
- 2: Pulverreservoir
- 3: Rolle
- 4: Hebezylinder
- 5: Trennwand
- 6: Bestrahlungseinrichtung/Laser
- 7: Laserstrahl
- 8: Spiegel
- 9: Pulverbett
- 10: Senkzylinder
- 11: Bauplatte
- 12: Werkstück
- 13: Pulverschicht
- 14: Reflektierter Strahl
- 15: Gepulster Laserstrahl
- 16: Vertiefung/Dampfkapillare
- 17: Schmelzbereich
- 18: Pulslaser
- 19: Dauerstrichlaser
- 20: Dauerstrichlaserstrahl
- 21: Steuereinrichtung
- 22: Bilderfassungseinrichtung
- p: Pulsphase
- p1, p2, p3: gepulster Laserstrahl
- s: Schmelzphase
- s1: Dauerstrahllaser

## Patentansprüche

1. Additive Fertigungsanlage (1), insbesondere für selektives Laserschmelzen, umfassend:
- eine Bauplatte (11), die zur Aufnahme mindestens einer aus einem aufschmelzbaren Material gebildeten Pulverschicht (13) ausgebildet ist;
- eine Bestrahlungseinrichtung (6, 8, 18, 19), die dazu ausgebildet ist, einen Schmelzbereich (17) der Pulverschicht (13) zur Erzeugung einer Vertiefung (16) zu bestrahlen, wobei die Bestrahlungseinrichtung (6, 8, 18, 19) ferner dazu ausgebildet ist, die Pulverschicht (13) im Bereich der Vertiefung (16) durch Bestrahlung aufzuschmelzen.

2. Additive Fertigungsanlage (1) nach Anspruch 1,
**dadurch gekennzeichnet, dass**
die Bestrahlungseinrichtung (6, 8, 18, 19) zur Abgabe eines Dauerstrichlaserstrahls (20) und zum Bestrahlen des Schmelzbereichs (17) für das Aufschmelzen mit dem Dauerstrichlaserstrahl (20) ausgebildet ist.

3. Additive Fertigungsanlage (1) nach einem der vorhergehenden Ansprüche, insbesondere nach Anspruch 2
**dadurch gekennzeichnet, dass**
die Bestrahlungseinrichtung (6, 8, 18, 19) dazu ausgebildet ist, zumindest einen Teil der Energie eines/des Dauerstrichlaserstrahls (20) in die Vertiefung (16) einzubringen.

4. Additive Fertigungsanlage (1) nach einem der vorhergehenden Ansprüche,
**dadurch gekennzeichnet, dass**
die Bestrahlungseinrichtung (6, 8, 18, 19) zur Abgabe eines gepulsten Laserstrahls (15) und zur Bestrahlung der Pulverschicht (13) mit dem gepulsten Laserstrahl (15) zur Bildung der Vertiefung (16) ausgebildet ist.

5. Additive Fertigungsanlage (1) nach einem der vorhergehenden Ansprüche, insbesondere nach Anspruch 4,
**dadurch gekennzeichnet, dass**
die Bestrahlungseinrichtung (6, 8, 18, 19) dazu ausgebildet ist, einen/den gepulsten Laserstrahl (15) mit einem Dauerstrichlaser (19), insbesondere unter Verwendung einer Modulationseinrichtung, zu erzeugen.

6. Additive Fertigungsanlage (1) nach einem der vorhergehenden Ansprüche,
**gekennzeichnet durch**
eine Steuereinrichtung (22), die dazu ausgebildet ist, zum Erzeugen der Vertiefung (16) die Bestrahlungseinrichtung (6, 8, 18, 19) lotrecht über der dem Schmelzbereich (17), insbesondere über der zu erzeugenden Dampfkapillare Vertiefung (16), anzuordnen.

7. Additive Fertigungsanlage (1) nach einem der vorhergehenden Ansprüche, insbesondere nach Anspruch 5,
**dadurch gekennzeichnet, dass**
ein/die Steuereinrichtung (22) dazu ausgebildet ist, zum Aufschmelzen der Pulverschicht (13) im Bereich der Vertiefung (16) die Bestrahlungseinrichtung (6, 8, 18, 19) derart anzuordnen, dass ein von der Bestrahlungseinrichtung (6, 8, 18, 19) ausgehender Strahl in einem Winkel kleiner 90° gegenüber einer durch die Oberfläche der Bauplatte (11) definierten Ebene auf die Pulverschicht auftrifft.

8. Additive Fertigungsanlage (1) nach einem der vorhergehenden Ansprüche,
**dadurch gekennzeichnet, dass**
die Pulverschicht (13) aus einem Material gebildet ist, das bei einfallendem Licht mit einer Wellenlänge zwischen 250nm und 1250nm bereichsweise eine Reflektivität größer 70%, bevorzugt größer 80%, aufweist.

9. Additive Fertigungsanlage (1) nach einem der vorhergehenden Ansprüche,
**dadurch gekennzeichnet, dass**
das aufschmelzbare Material als eine Legierung mit mindestens zwei Elements ausgebildet ist, wobei die mindestens zwei Elemente unterschiedliche Siedepunkte aufweisen, wobei sich die Siedepunkte bevorzugt mindestens um 300°C, 500°C, 600°C oder 800°C voneinander unterscheiden.

10. Additive Fertigungsanlage (1) nach einem der vorhergehenden Ansprüche,
**dadurch gekennzeichnet, dass**
die Bestrahlungseinrichtung (6, 8, 18, 19) eine erste Strahlenquelle (18), insbesondere einen Pulslaser (18), zur Abgabe eines gepulsten Laserstrahls (15) und eine zweite Strahlenquelle (19), insbesondere einen Dauerstrichlaser (19), zur Abgabe eines Dauerstrichlaserstrahls (20) umfasst.

11. Additive Fertigungsanlage (1) nach einem der vorhergehenden Ansprüche,
**dadurch gekennzeichnet, dass**
die Bestrahlungseinrichtung (6, 8, 18, 19) dazu ausgebildet ist, in einer Pulsphase (p) eine Vielzahl von gepulsten Laserstrahlen (15, p1, p2, p3) zum Bilden der Vertiefung (16) abzugeben und in einer Schmelzphase (s) einen/den Dauerstrichlaserstrahl (20) zum Aufschmelzen abzugeben, wobei vorzugsweise die Schmelzphase (s) der Pulsphase (p) zeitlich nachgelagert ist.

12. Additive Fertigungsanlage (1) nach einem der vorhergehenden Ansprüche, insbesondere nach Anspruch 11,
**dadurch gekennzeichnet, dass**
die Bestrahlungseinrichtung (6, 8, 18, 19) dazu ausgebildet ist, mindestens einen Laserimpuls (15, p1, p2, p3) zum Erzeugen der Vertiefung (16) zumindest teilweise zeitgleich mit einem/dem Dauerstrichlaserstrahl (20, s1) abzugeben.

13. Additive Fertigungsanlage (1) nach einem der vorhergehenden Ansprüche,
**gekennzeichnet durch**
- eine Bilderfassungseinrichtung (22), die dazu ausgebildet ist, Schmelzbilder aufzunehmen;
- eine Recheneinrichtung (21), die dazu ausgebildet ist, die Schmelzbilder hinsichtlich mindestens eines Qualitätskriteriums zu analysieren.

14. Additive Fertigungsanlage (1) nach einem der vorhergehenden Ansprüche, insbesondere nach Anspruch 13,
**dadurch gekennzeichnet, dass**
die Recheneinrichtung (21) dazu ausgebildet ist, mindestens einen Prozessparameter der additiven Fertigungsanlagen (1), insbesondere der Bestrahlungseinrichtung (6, 8, 18, 19), unter Berücksichtigung der Analyse des Qualitätskriteriums einzustellen.

15. Additives Herstellungsverfahren, insbesondere zur Verwendung mit einer additiven Fertigungsanlage (1) nach einem der vorhergehenden Ansprüche, umfassend die folgenden Schritte:
- Bereitstellen einer Pulverschicht (13) aus einem aufschmelzbaren Werkstoff;
- Bestrahlen eines Schmelzbereichs (17) der Pulverschicht (13) zur Erzeugung einer Vertiefung (16);
- Bestrahlen der Pulverschicht (13) im Bereich der Vertiefung (16) zum Aufschmelzen der Pulverschicht (13).

16. Additives Herstellungsverfahren nach Anspruch 15,
**dadurch gekennzeichnet, dass**
das Bestrahlen der Pulverschicht (13) zur Erzeugung der Vertiefung (16) das Abgeben einer Vielzahl von Laserimpulsen (15, p1, p2, p3) umfasst.

17. Additives Herstellungsverfahren nach einem der Ansprüche 15 oder 16,
**dadurch gekennzeichnet, dass**
das Bestrahlen der Pulverschicht (13) zur Erzeugung der Vertiefung (16) mit einem Laserimpuls (15, p1, p2, p3) und das Bestrahlen zum Aufschmelzen der Pulverschicht (13) zumindest teilweise gleichzeitig ausgeführt werden.

18. Computerlesbares-Speichermedium, welches Instruktionen enthält, die mindestens einen Prozessor dazu veranlassen, ein Verfahren nach einem der Ansprüche 15 bis 17 zu implementieren, wenn die Instruktionen durch den mindestens einen Prozessor ausgeführt werden.
